# EUROPEAN PATENT APPLICATION

(11) **EP 3 795 965 A1**
(43) Date of publication of application: **24.03.2021**
(21) Application number: 19425068.4
(22) Date of filing: 19.09.2019
(51) Int. Cl.: G01K 1/14, G01K 1/16

(54) **SUPPORT SYSTEM FOR SUPPORTING AN ENVIRONMENTAL TEMPERATURE SENSOR IN RAILWAY SECTOR**

(71) Applicant: Lef S.r.l., 50019 Sesto Fiorentino (IT)
(72) Inventor: CAVALIERI, Filippo, 59015 Carmignano (PO) (IT)
(74) Representative: Emmi, Mario

(57) **Abstract**

The present invention refers to a support device support device (1) for a temperature sensor (200) suitable for detecting the environmental temperature, the device comprising:
- A lower portion (2) configured for being fastened to a rail of a railway line, preferably to the stock rail;
- An upper portion (3) configured for being fastened to the said temperature sensor;

According to the invention, the lower portion and the upper portion are thermally insulated between each other.

## Description

### Field of the invention

The present invention relates to the technical field of railways.

In particular, the invention relates to an innovative thermally insulated support for supporting a temperature sensor to be applied in railway sector.

### Brief outline of prior art

In the field of railways, the correct measurement of both environmental temperature and temperature directly measured on the track is essential in order to control a potential activation of de-icing systems, where temperature may dangerously drop below values which determine ice formation and then cause a potential block of switch points.

In general, there are two types of sensors.

A first sensor is intended for monitoring the temperature of the track and therefore it is fastened through suitable clips directly to the track. It is intended for verifying the correct operation of self-adjusting heating cables and therefore it is intended for checking the correct heating of the track. As mentioned, it is fastened through fastening and compression "clips" to the stock rail of the switch points.

A second sensor used, which is very important, is instead the sensor necessary for measuring environmental temperature, in order to check the correct activation of de-icing systems. This sensor is named proximity sensor.

Generally, in both cases, there are used sensors for detecting temperature of type PT100 and then in the form of a thermal resistance made of platinum with 100 Ω nominal resistance at a temperature of 0°C. The principle of operation is based on the variation of electric resistance upon temperature variation.

Over the present state of the art, these sensors of proximity for measuring environmental temperature are connected through electric cable to 8KVA and 10KVA square cabinets. The length of the electric supply cable may reach 12 meters so as to have a sensor which can be positioned spaced from tracks and the cabinet with no risk of losing it. By positioning it spaced from the cabinet of the heated switch points, which produces heat per se, the detection of the sensor is not distorted, thus avoiding he risk that the sensor detects a false temperature with respect to the real environmental temperature. Moreover, by positioning it spaced from the switch points, the temperature of the track is not detected, in the event that it is heated by the activation of heating systems controlled by the measure detected by means of the sensor for environmental temperature.

Having said that, the experience proved that the problem of inaccurate and little reliable detection of environmental temperature exists so far.

In fact, by means of the long cable, operators often position the sensor far from tracks but possibly positioning it in a catch basin/channel or they arrange it directly on the floor or in narrow and covered places such as a draining pipe or the like. In this situation, it is obvious that the detection of environmental temperature is distorted since holes and narrow, closed and wet places maintains temperatures which are very different from the whole surrounding environment.

Depending on where they are positioned, it may happen that they detect a critical temperature below zero, perhaps because of the shade, while instead the tracks of the points positioned at many meters of distance are hit by the sun and anyway, they are subjected to a higher environmental temperature.

Accordingly, a useless activation of de-icing systems would occur.

In other cases, heating systems might not be activated when the sensor has been arranged erroneously in a point which heats more than the portion of switch points intended for being controlled by it.

### Summary of the invention

Therefore, the aim of the present invention is to provide an innovative fastening device, which enables to resolve at least in part said technical disadvantages.

In particular, it is felt the need of an invention which enables to apply any temperature detecting sensor in railway field, preferably a thermal sensor of the type PT100, so that it can detect in the most accurate way the actual environmental temperature, with no risk of detecting false temperatures with respect to the surrounding environment, since it is positioned near sources of heat for example.

Therefore, these and other aims are achieved with the present support device for a temperature sensor suitable for detecting an environmental temperature, according to claim 1.

This support device (1) comprises:
- A lower portion (2) configured for being fastened to a rail of a railway line, preferably to the flange of the track;
- An upper portion (3) configured for fastening the said temperature sensor in position.

In this manner, the support is fastened to the rail on one part and on the other part it supports the sensor which protrudes and is spaced from the rail to which is applied. Since the support is fastened directly to the rail, it will be in an optimal position for measuring environmental temperature. However, the rail is subjected to sudden rise/fall in temperature due to heating systems and electric cables.

In order to prevent the sensor from measuring a false temperature due to the heat of the track, it has been provided, according to the invention, the thermal insulation of the two said portions (or the thermal uncoupling of the two said upper an lower portions, in other words), so that the heat deriving from the track cannot transfer from the lower portion towards the upper portion of the support where the sensor is fastened.

Therefore, in this manner, it is possible to apply this temperature sensor directly on the rail in order to achieve a precise environmental measurement and with no risk that the heat passing in the track itself affects this temperature detection.

The sensor will be like it is supported mid-air spaced from the rail and not in contact with it, enabling to measure an environmental temperature in proximity of the track and therefore measuring precisely.

It is also described here a method to detect an environmental temperature in proximity or on a predetermined section of a railway line for trains, preferably in proximity of switch points, the method providing the application of a temperature sensor (200), suitable for detecting the environmental temperature by means of the fastening to the said rail of a support having a lower portion (2), configured for being fastened to the rail, preferably to the flange of the rail, and an upper portion (3) configured for fastening and supporting the said temperature sensor so that the sensor is spaced from the surface of the rail and not being in contact with the rail.

Therefore, the sensor is like suspended on the rail supported by said support.

For example, the lower portion can be fastened to the rail and then the sensor can be fastened to the upper portion.

According to the invention, the said lower portion and upper portion are thermally insulated between each other, or thermally uncoupled in other words.

In this way, the possible heat of the rail cannot be transmitted to the portion which fastens the sensor, thus preventing the sensor from detecting a false temperature.

Further advantages can be inferred by the remaining dependent claims.

### Brief description of drawings

Further features and advantages of the present support device for a proximity sensor according to the invention will become apparent from the following description of preferred embodiments thereof, given only by way of non-limiting example, with reference to the attached drawings, wherein:
- Figure 1 depicts in an axonometric view the present device applied to the rail of a track and with the sensor applied to it;
- Figure 2 and figure 3 depict two different axonometric views of the only device in question;
- Figure 4 is an exploded axonometric view.

### Description of some preferred embodiments

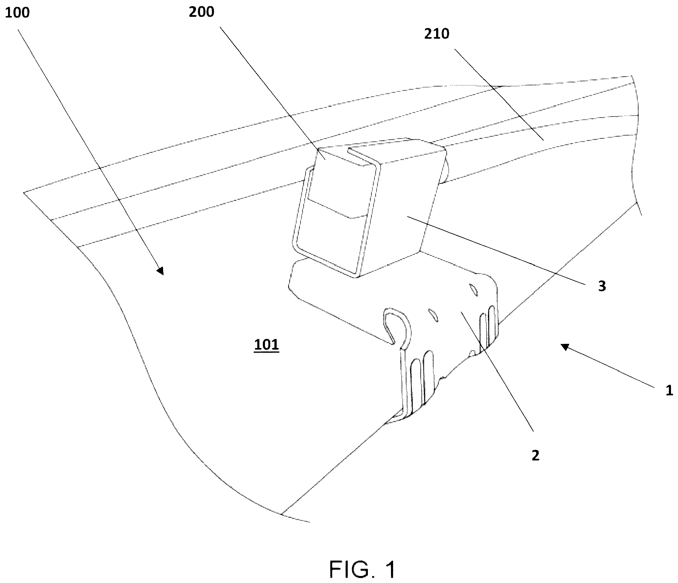

With reference to figure 1 it is schematically depicted a rail 100 of a track to which this support device can be joined.

As well-known according to the state of art, the rail is a steel section of suitable resistance having the purpose of supporting the rolling stocks and driving them by means of the interaction with the wheel flange.

Rails of different shape and size exist and all of them are characterized by three fundamental parts:
- The *flange*, the lowest part which stands on the fastenings;
- The *web*, supporting vertical part;
- The *head*, part in direct contact with the steel wheels of rolling stocks which is subject to wear.

Having said that, the support device subject of the invention is formed by a lower portion 2, which is configured for being firmly fastened to the lateral profile of the rail, in particular to the flange (see in fact figure 1). Then it is joined to the upper part 3 intended for supporting the temperature sensor.

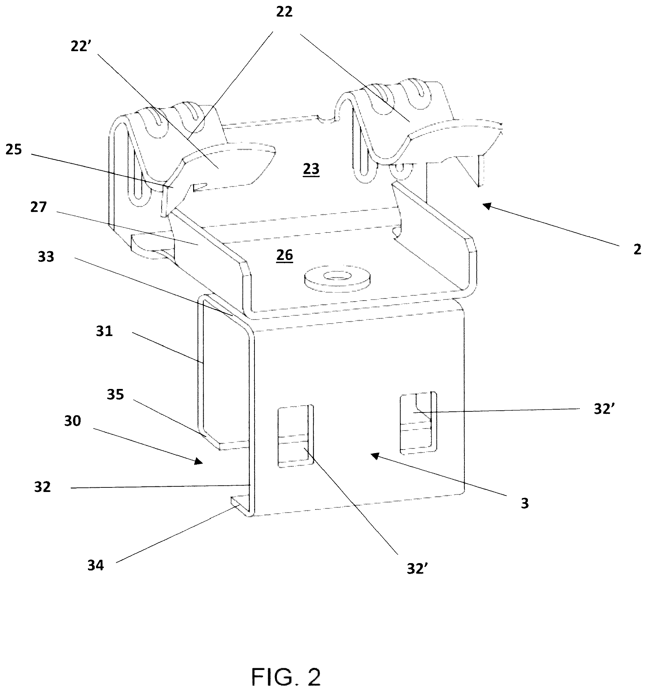

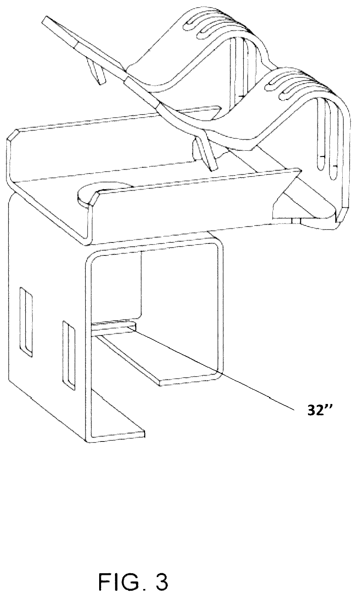

In more details, figure 2 and figure 3 depict the device in its whole.

The lower base 2 which is fastened to the base of the rail (that is the flange) is formed by two elastically deformable hooks 22, which branch off from a vertical wall 23 to the two ends of this vertical wall.

Such hooks are preferably curved.

More particularly, they are preferably substantially S-shaped or with a sort of sinusoid shape.

The ends 22' of such hooks provide a notch which forms a folded whisker 25 which is elastically deformable to be better hooked and to support the base of the track.

Then the vertical wall 23 is connected to a horizontal surface 26 which has laterally two vertical walls 27 which protrude from the horizontal surface 26 directed to the overlying hooks 22.

In this manner, it is defined a hooking space comprised between the hooks 22 and the vertical walls 27.

Therefore, as highlighted in figure 1, through the two vertical walls 27, the surface 26 leans on the back 101 of the track (back of the flange) while the base of the track (i.e. the base of the flange facing the ground) is hooked by the two hooks 22 which buckle elastically by fastening to the track.

The bent shape of hooks, in particular the S-shape depicted in figure and the notches 25 are advantageous since such hooks together with notches ensure a better fastening by inserting by force onto the flange of the track.

The hooks 22, also defined "stings", move away elastically from the vertical wall 27 during the step of insertion due to elastic deformation and then when the insertion into the flange has finished, they tend to return to an initial position thus they are subjected to a traction like a spring. This ensures a great fastening, which is improved additionally through whiskers 25 which fasten further.

No whiskers 25 could also be provided although their presence optimizes the fastening, as mentioned.

It is evident from the description that the connection releasable, i.e. the operator can fasten/unfasten the part 2 every time, if necessary.

Instead, the upper part 3 is intended for fastening firmly but in releasable manner, the temperature sensor.

As depicted in figure 2 and figure 3, this part is in form of a folded sheet, with an almost open O shape, so as to create a sufficient space to insert and lock the sensor.

Two vertical walls 31 and 32 are provided with the wall 32 longer than the wall 31. Both walls end with a horizontal base 35 or horizontal bracket. The wall 31 is fitted with the bracket 21 and the wall 32 is fitted with the bracket 34, whose lengths are for both brackets a fraction of the distance between the two vertical walls (31, 32) so as to leave an interposed clear space between them.

Then the two vertical walls 31 and 32 are joined to each other by means of a joint horizontal wall 33 arranged on the opposite part of the two horizontal parts 34 and 35 (brackets 34 and 35 in other words).

As depicted in figure 2, the wall 32 is holed and has two openings 32' from which two further horizontal brackets 32" are obtained, one of them is highlighted in figure 3.

The two brackets 32" serve for support base for the sensor and could be obtained on the opposite wall 31, if necessary.

Therefore, the sensor leans on them and it is supported. Moreover, as depicted in figure 1, the sensor is trapped between the bracket 34 and the support brackets 32". More particularly, the bracket 34 is arranged on the back of the sensor (see always figure 1) while the horizontal bracket 35 is fitted into a blind groove suitably obtained in the body of the sensor (preferably of PT100). Therefore, the horizontal bracket 35 is comprised between the upper bracket 34 and the support brackets 32".

In this manner, the sensor is fully locked in position.

Both the upper part 3 and the lower part 2 are preferably made of metal and preferably obtained by folding sheet or foil, by laser cut through machine tools. More parts can be possibly obtained by folding and welded together.

The two upper and lower parts are separated from each other and joined through a junction pin 40.

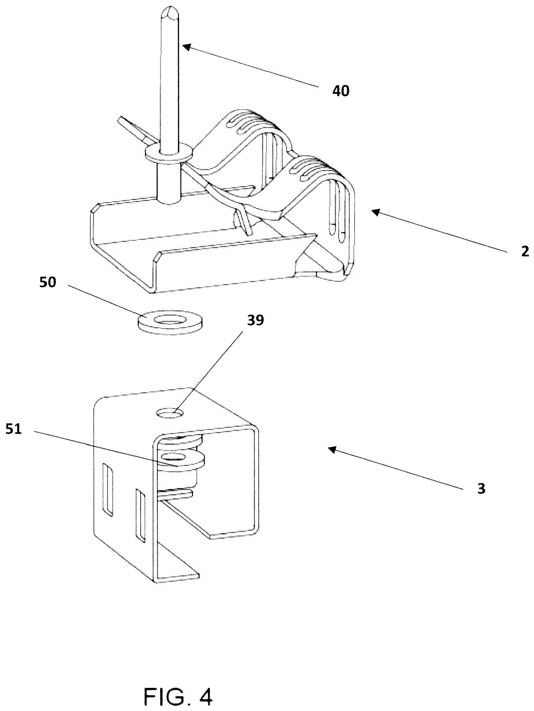

More particularly, as depicted further in the exploded view of figure 4, the pin 40 is obtained as joint means for joining the two said parts together through suitable holes which are obtained in the two parts (see for example the hole 39 of figure 4).

According to the invention, it is then provided an insulating material which insulates thermally the two said upper and lower parts, separating them physically and preventing the direct contact and the heat transmission.

In particular, there are provided one or more plates of insulating material 50 thermally interposed between the said two parts, preferably Teflon.

Figure 4 depicts a single plate 50 but more thicknesses of material can be provided also with different shape from the plate and different superficial extension.

In this manner, the two upper and lower parts are spaced from each other by means of a thickening of thermally insulating material.

Therefore, the parts joined to the track, i.e. the portion 2, could also overheat due to the heating devices when they are activated but the heat will not be transmitted to the part 3 which fastens the sensor by means of the thickening of the interposed insulating material.

In this manner, the sensor for detecting environmental temperature could be applied in proximity of the track without being subjected to alterations of measurements due to local temperatures of the track, not being actually in contact with the rail.

The thicknesses 51 always in figure 4 are the washers made of steel in order not to exert a force of the rivet directly onto the insulating washer/s 50.

Therefore, in use, the lower portion 2 is applied to the flange of the track so that the upper portion 3 protrudes from the track spaced from it, i.e. like being suspended on the track.

Then the sensor is fastened to the said upper part 3.

## Claims

1. A support device (1) for a temperature sensor (200) suitable for detecting the environmental temperature, the device comprising:
- A lower portion (2) configured for being fastened to a rail of a railway line, preferably to the stock rail;
- An upper portion (3) configured for being fastened to the said temperature sensor;
**Characterized by the fact that** the lower portion and the upper portion are thermally insulated between each other.

2. A support device (1), according to claim 1, wherein it is provided a layer (50) of thermally insulated material interposed between the lower portion and the said upper portion so as to thermally uncouple the upper portion from the lower portion.

3. A support device (1), according to claim 1 or 2, wherein said layer of insulating material is Teflon.

4. A support device, according to claim 1, wherein said support device is configured so that in use the sensor supported by the upper portion is not in contact with the rail on which the support is mounted.

5. A support device (1), according to one or more of the preceding claims, wherein the lower portion is configured for being fastened, in removable manner, to the base of the rail.

6. A support device (1), according to one or more of the preceding claims, wherein the upper portion protrudes from the lower portion so as to be suspended in use and not in contact with any part of the rail.

7. A support device (1), according to one or more of the preceding claims, wherein the lower portion has a hook-shaped portion (22) configured for elastically fastening the edge of the rail.

8. A support device (1), according to one or more of the preceding claims, wherein the upper portion comprises:
- Two lateral walls (31, 32) spaced from each other and joined by means of a horizontal wall (33) positioned at an end of both lateral walls, the opposite ends of lateral walls providing respectively a first (34) and a second horizontal bracket (35);
- At least one of said two lateral walls (31, 32) shaping at least a third horizontal bracket (32") which supports the sensor;
- The heights of said two lateral walls (31, 32) being different from each other such that the first horizontal bracket (34) and the second horizontal bracket are positioned at two different heights, preferably the two brackets being at such heights that in use the first bracket (34) leans against the back of the sensor and the second one is arranged at a height which intercepts the body of the sensor in use.

9. A support device (1), according to one or more of the preceding claims, wherein the upper portion and the lower portion are separated from each other and connected by means of a pin (40).

10. A support device (1), according to one or more of the preceding claims, wherein the upper portion and the lower portion are made of metallic material, preferably folded sheet.

11. A support device (1), according to one or more of the preceding claims, wherein the said thermally insulating material is in the shape of a holed plate mounted through the hole thereof on a pin which joins the lower portion to the upper portion.

12. A method to detect the environmental temperature in proximity or on a predetermined section of a railway line for trains, the method providing the application of a temperature sensor (200), suitable for detecting the environmental temperature, directly to the said rail by means of the fastening to the said rail of a support device having a lower portion (2), which is fastened to the rail, and an upper portion (3) to which the said sensor is fastened and which supports the said temperature sensor so that the sensor is spaced from the surface of the rail and not in direct contact with the rail and with said lower portion and upper portion thermally uncoupled from each other.

13. A method, according to claim 12, wherein said thermal uncoupling is achieved by means of the interposition of a layer (50) of thermally insulating material which is interposed between the upper portion and the lower portion.

14. A method, according to claim 13, wherein the insulating material is Teflon.

15. A method, according to claim 13 or 14, wherein the insulating layer is washer-shaped.
